# EUROPEAN PATENT APPLICATION

(11) **EP 2 428 546 A1**
(43) Date of publication of application: **14.03.2012**
(21) Application number: 10769206.3
(22) Date of filing: 20.04.2010
(51) Int. Cl.: C10B 49/22, C10B 49/10, C10B 53/02, B01J 8/26, C10G 1/00

(54) **EQUIPMENT AND A METHOD FOR GENERATING BIOFUEL BASED ON RAPID PYROLYSIS OF BIOMASS**

(30) Priority: 30.04.2009 CL 10342009
(71) Applicant: Universidad De Concepcion, Concepción (CL)
(72) Inventor: WILKOMIRSKY FUICA, Igor, Concepcíon (CL)
(74) Representative: Carvajal y Urquijo, Isabel
(86) International application number: PCT/CL2010/000015
(87) International publication number: WO 2010/124406

(57) **Abstract**

Equipment and a process to produce biofuel by fast pyrolysis of organic material, comprising a system of three interconnected serial fluidized bed reactors: a fast pyrolysis reactor located inside another reactor wherein charcoal is burned; a combustion reactor that burns the charcoal generated in the fast pyrolysis reactor; and a preheating reactor to preheat inert particulate material. The equipment also includes a pneumatic recycling system for inert particulate material.

## Description

### Technical Field

The invention is related to the generation of biofuel from fast pyrolysis processes, which can be efficiently applied as a fuel, for instance, in boilers and cement kilns.

### State of the art

Slow wood distillation by heating up to 400-600°C in the absence of oxygen (air) has been used probably for 6 thousand years to produce charcoal (or wood coal, as is commonly known). This simple process transforms 60 to 70% of wood weight in a fuel that is easily manageable and have good combustion characteristics, and is extensively practiced all over the world in these days.

The distillation or heat pyrolysis of wood and other plant organic products such as sawdust, wheat straw, oat straw, etc., has raised a new interest in the last two decades, since if the process is performed quickly, carbonization decreases significantly to 10-15% of the initial mass and a gas fraction comprising condensable vapors is formed, which represents up to 75% by weight of the feedstock and generates upon condensation a liquid biofuel or bio-oil, leaving 10-20% of a non-condensable gas.

The generated biofuel contains around 20 times more combustion heat per unit of weight than the combustion heat contained in the original organic material, which makes it more economical and more easily used, manipulated and transported. This crude biofuel can be directly used as a fuel in certain applications such as boilers and cement kilns, or it can be refined to produce an equivalent to diesel fuel for engines. There are also other options, such as gasification to produce synthetic fuels and the production of derived chemicals. The non-condensable gas generated in the process can also be directly burned or can be incorporated into a preexisting gas network.

Since the use of lignocellulosic (plant) materials to produce biofuels closes the cycle of production and consumption of carbon dioxide in Earth (renewable energy), it has attracted attention in many countries in the world where an appropriate technology to produce these biofuels in a commercial scale is currently researched.

**Fast pyrolysis of lignocellulosic material:** Fast pyrolysis or flash pyrolysis refers to the reaction rate of organic material particles to produce pyrolysis reactions, with the concomitant formation of pyrolysis vapors that are condensed to produce the biofuel, non-condensable pyrolysis gases and charcoal.

Fast pyrolysis occurs between 400 - 650°C within a reaction time that is usually less than 5 seconds, and this reaction time decreases to less than one second at temperatures between 650 - 900°C. In this case, as temperature increases there is also an increase in the fraction of non-condensable pyrolysis gas. At 900°C, this can reach 60% of the weight of the original feedstock. Independently of the temperature range at which pyrolysis is carried out, all reactions that take place in this process are endothermic, *i.e.* they consume heat.

For wood and lignocellulosic products, pyrolysis kinetics can be described by three independent first order reactions with respect to its pseudo-components (cellulose, hemicellulose and lignin), being cellulose depolymerization the slower reaction. The biofuel obtained by condensation of the vapors generated in the fast pyrolysis is a complex mixture of organic compounds, the composition of which depends on the raw materials used, the reaction temperature and rate, and the cooling rate of the generated vapors. The mixture of these components is essentially derived from depolymerization and fragmentation reactions of the cellulose, hemicellulose and lignin components, being carboxylic acids, oxygenated compounds, sugars and phenols the most abundant compounds.

The crude biofuel obtained by condensation of the vapors generated by fast pyrolysis is a dark low-viscosity liquid with a content of water between 15 and 30% and a pH between 2 - 2.5. The upper calorific power varies between 3,800 and 4,500 kcal/Kg.

The pyrolysis gas (or pyrolysis non-condensable gas) represents between 10 and 20% of the total conversion in weight of the initial organic material, and essentially comprises carbon monoxide, carbon dioxide and hydrogen, with a calorific power between 2,000 and 2,600 kcal/m³, which represents from 30 to 50% of the calorific power of natural gas (methane).

In turn, the fixed carbon (charcoal) generated in the fast pyrolysis represents between 10 to 15% of the original organic material weight and generally has a particle size smaller that 0.5 mm, with an upper combustion heat of 5,500 - 6,200 kcal/Kg.

**Fast pyrolysis processes:** Due to the potential of fast pyrolysis, an important amount of technologies to carry out this process have been proposed or are being developed. Two of the most important problems that must be addressed are how to heat the organic material as fast as possible to carry out the pyrolysis reactions, which requires the use of relatively fine material (usually under 3 mm), and how to deliver a large amount of heat in a very short time. These heat transfer problems are central to any successful development that requires extreme operation conditions in the pyrolysis reactor.

The previously proposed pyrolysis reactors or those under current development are divided into two categories:
- fluidized bed reactors, such as bubble reactors, turbulent reactors, recycling reactors and pneumatic transport reactors; and
- mechanical action reactors, such as rotary cone reactors, ablation rotary plates reactors and screw reactors;
- a special category is the vacuum reactor that can employ any fast pyrolysis technology connected to a vacuum system.

There is a substantial amount of invention patents regarding pyrolysis and particularly fast or flash pyrolysis. Chronologically, the Patent Application WO 2008005475(A1**)** with the American priority US 20060480914, entitled "Method **and system for accomplishing flash or fast pyrolysis with carbonaceous materials**", describes a conversion system through pyrolysis of carbonaceous materials that employs chemical energy sources or others, which comprises a reactor fed with a dry load, a charcoal recovery and separation system and a condenser for the gases and vapors from the reactor. The energy necessary for operation is supplied by a furnace that burns the generated charcoal.

The Patent Application WO 2008005476(A2**)** with the American priority US 20060480915, entitled "**Method and system for accomplishing flash or fast pyrolysis with carbonaceous materials**", similar to the former one, describes a conversion system through pyrolysis of carbonaceous materials that employs chemical energy sources or others, which comprises a reactor fed with a dry load, a charcoal recovery and separation system and a condenser for the gases and vapors from the reactor. The energy necessary for operation is supplied by a furnace that burns the generated charcoal.

The American invention Patent US 7.108.767**,** entitled "Pyrolysis machine" (September 19^{th}, 2006), describes a vacuum equipment to obtain pyrolysis subproducts from biomass, which is fed between two counter-rotatory rollers and a heated fluid (overheated steam, oil or fused salts) circulates within said rollers. The biomass is preheated by injecting dry overheated steam. An internal condenser condensates the vapors into bio-oil, which is subsequently drained out. Solid residues are removed by a screw from the bottom part.

The American invention Patent US 5.961.786**:** "**Apparatus for a circulating bed transport fast pyrolysis reactor system**", (October 5^{th}, 1999), protects a methods and apparatus for fast pyrolysis of carbonaceous materials. The load comprising carbonaceous material, non-oxidizing transport gas and an inert heat-transporting material is mixed within the reactor base and transported upwards through the tubular reactor in a pneumatic transport regime. Instead of an inert material, catalysts or a mixture of catalysts and sand can be used. Solids are separated from the non-condensable gases and vapors in a cyclone system, with hot solid recycling to the reactor.

The American invention Patent US 5.728.271 entitled "**Energy efficient liquefaction of biomaterials by thermolysis",** (March 17^{th}, 1998), discloses a thermolysis process through liquefaction of solid biomass, which is performed in a fluidized bed with inert material, which is characterized by its relatively low temperature (360 - 420°C) and moderate heating rates. Unlike other processes (that operate at higher temperatures), this process allows getting a high liquid fraction and a low charcoal fraction. The liquid has a composition that is similar to those obtained in the fast pyrolysis processes.

The invention Patent US 5.770.017 entitled "**Method for ablative heat transfer**", (June 23^{rd}, 1998), describes a method and apparatus for heat treatment of biomass waste through pyrolysis and the subsequent recovery of combustible products. The technology is characterized by heat transfer by direct contact between the solid or semi-solid load and the internal surface of the reactor, transporting the load through a helicoidally-shaped tube at high speed, ensuring the contact with the external periphery of the internal surface. After the separation of the products in cyclones, the gases can be sent to a burner of a power generation system. In this second case, the gases must previously pass through a condenser.

The American invention **Patent** US 5.792.340**:** "**Method and apparatus for a circulating bed transport fast pyrolysis reactor system",** (August 11^{th}, 1998), is similar to the US Patent 5.961.786, and describes a method and apparatus for fast pyrolysis of carbonaceous materials. The load comprising carbonaceous material, non-oxidizing transport gas and an inert heat-transporting material is mixed within the reactor base and subsequently transported upwards through the tubular reactor in a pneumatic transport regime. Instead of an inert material, catalysts or a mixture of catalysts and sand can be used. Solids are separated from the non-condensable gases and vapors in a cyclone system, with hot solid recycling to the reactor.

The invention Patent US 5.536.488: "**Indirectly heated thermochemical reactor processes**", (July 16^{th}, 1996), discloses a reactor with a solid particle bed that is stirred by a gas or vapor flowing through said bed. The bed is heated by resonance tubes of a pulse burner (with oscillations of at least 20 Hz and acoustic pressures higher than 165 dB) in the reaction zone of the bed, in such a way as to transfer heat from the pulsating combustion gas flow to the solid particles of the bed. This equipment can be used to reform heavy hydrocarbons or to gasify carbonaceous materials, including biomass and black liquor, to produce gaseous fuel at relatively low temperatures (200 - 500°C), using steam as fluidization gas. The bed temperature is maintained homogeneous with fluidization gas spatial rates between 3-90 cm/s.

The American invention Patent US 4.102.773**:** "**Pyrolysis with cyclone burner**", (July 25^{th}, 1978), describes a flash pyrolysis process (at 300°C) of previously grinded carbonaceous material, using a particulate material as a heat source. The product comprises volatilized hydrocarbons and a solid residue that contains charcoal. This charcoal is then separated from the remaining products. Condensation of volatiles allows recovering valuable compounds. The particulate material used as a heat source is the coarse fraction of the solid residue (which is separated from the fine fraction in cyclones) and is recycled to the pyrolysis reactor after subjecting it to air oxidation. The feed must have a particle size preferably lower than 250 µm. The residence time in the reaction zone of the pyrolysis reactor is, preferably, in the range between 0.1 - 3 s.

The invention Patent US 4.141.794**:** "**Grid-wall pyrolysis reactor",** (February 27^{th}, 1979), describes a variant of the Patent US 4.064.018, but introducing the use of an internal perforated duct for the feed, said perforations being used to introduce the heat source (particulate material), at an angle with respect to the entry of carbonaceous material, typically at 70 - 90° with respect to this. When the heat source material is radially introduced, the deposition of carbonaceous material is avoided. The process variables and conditions are similar to those of the mentioned patent.

The invention Patent US 4.064.018**: "Internally circulating fast fluidized bed flash pyrolysis reactor**", (December 20^{th}, 1977), describes a fluidized bed reactor for pyrolysis of carbonaceous material, which is fed together with a heat source (particulate material). The load is introduced through a vertical duct directly into the reactor. During operation, an ascendant circulation of particulate material (which supplies heat to the bed) and solid residues containing carbon is produced, which flows along the internal surface of the duct. The solid material carried over by the gases and vapors is recycled to the reactor through an external cyclone.

From the analysis of the state of the art, it can be concluded that invention patents regarding flash pyrolysis in recycling fluidized bed reactors are the most numerous, and all of them use only one heating mechanism for the organic material, which is supplied by a preheated inert material such as sand or other material.

The problem presented by using an overheated particulate material as the only heat source is that said material must be heated well over the optimal pyrolysis temperature in order to supply the heat amount required for the pyrolysis reactions. For example, if the optimal pyrolysis temperature for a determined organic material is 500°C, the inert material must be heated 100 to 200°C over the pyrolysis reactor operation temperature. This causes that when the organic material enters into contact with the overheated inert material, the former can be partially gasified and the generation of condensable vapors can be impaired, which lowers the biofuel yield.

Additionally, all the previous patents use recycling fluidized bed systems in which all the particulate inert material used for heating is carried over by the gases, and it must be subsequently recovered and separated from pyrolysis gases through cyclones, which are relatively efficient, but even in the best designed equipment very fine particles of charcoal and inert material (under approximately 10 microns) cannot be separated and contaminate the biofuel.

Another problem presented by existing fluidized bed systems is that the feeding of organic material as well as the fluidization of the inert material bed are carried out using an inert gas such as nitrogen, which dilutes the outlet gases from the pyrolysis reactor and the non-condensable pyrolysis gas, lowering its calorific power.

### Description of the Invention

To avoid the problems mentioned before, and also to provide an integrated, operatively flexible and autothermic process in terms of energetic requirements, in the present invention three serial fluidized bed reactors are used, as well as three combined mechanisms for heat transfer into the fluidized bed fast pyrolysis reactor, which is provided with a complex system for cleaning of the pyrolysis vapors through impact channels, cyclones and submicron filters.

In this system, the material to be pyrolyzed, reduced to a suitable fine size, is pneumatically injected into the pyrolysis fluidized bed using pyrolysis gas (non-condensable gas) or other preheated gas and simultaneously the bed is also fluidized with pyrolysis gas or other preheated gas. A major part of the heat required for pyrolysis is transferred through the walls of the pyrolysis reactor, using the heated gases generated in the bottom charcoal combustion reactor, while the remaining required heat is supplied to the reactor by means of inert particulate material that is externally preheated in a third reactor, wherein pyrolysis gas or other fuel is burned.

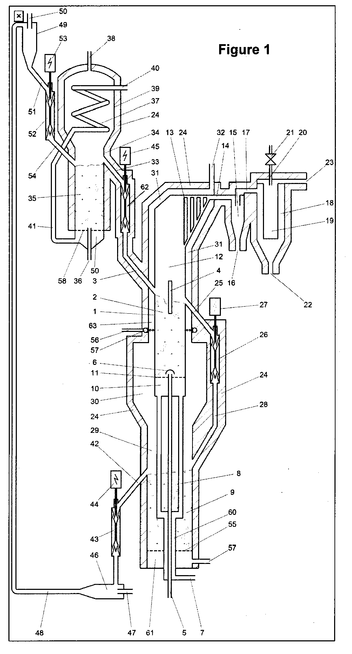

For a better understanding of this invention, a detailed description will be presented in the following paragraphs in relation to Figures 1, 2 and 3.

In Figure 1, the pyrolysis reactor **1,** with circular section or other geometry, is provided of a conventional gas distributor **11.** The bed **2** to be fluidized and where the fast pyrolysis reactions occur is formed by a material such as quartz sand, alumina (Al₂O₃) or other inorganic material, with a size ranging from 0.001 mm to 3 mm. The feed of organic material to be pyrolyzed, with a moisture content lower than 20% by weight and a size lower than 10 mm, is injected by means of a transport gas, such as non-condensable pyrolysis gas, nitrogen or other gas, through a duct **5,** which allows dispersing the organic material through a conventional nozzle **6** into the inert particulate material bed **2** to produce the fast pyrolysis reactions.

The particulate material bed **2** is fluidized by means of a gas, such as non-condensable pyrolysis gas, nitrogen or other suitable gas, which is blown through a duct **7** connected to an annular duct **60** that is concentric with respect to the injection duct **5** for the material to be pyrolyzed. The fluidizing gas is preheated in a conventional tube heat exchanger **8,** which is placed inside the bottom fluidized bed reactor **9.** The preheated gas is injected into the bottom section or plenum **10** of the pyrolysis reactor, from where it passes to the gas distributor **11** to fluidize the particulate bed **2.**

The gas spatial rate in the fast pyrolysis reactor (referred to the empty reactor) ranges from 20 to 500 cm/sec at the pyrolysis temperature, which ranges in turn from 350 to 950°C. The retention time (or mean reaction time) of the organic material to be pyrolyzed in the fluidized bed of inert particulate material 2, ranges from 0.1 to 30 seconds.

The heat required by the fast pyrolysis reactions is supplied into the fluidized pyrolysis bed 2 by means of three different mechanisms:
1.- By conduction through the walls of the reactor 1 through external forced convection of the hot gases generated in the combustion of charcoal in the external bottom fluidized bed **9,** which ascend through the expanded external annular space **30,** and through the reduced external annular space **31.**
2.- By forced convection of the fluidizing gas of the bed **2,** which is preheated in a heat exchanger **8** immersed in the bottom external fluidized bed for charcoal combustion **9,** in section **29** of the upper free zone of this reactor and in its top expanded section **30.**
3.- By conduction and radiation of the preheated inert particulate material in the top fluidized reactor **35,** wherein non-condensable pyrolysis gas or other fuel is burned, thereby feeding continually the heated inert particulate material into the fast pyrolysis reactor bed **2** through ducts **3** and **33.**

To get these combined heat transfer mechanisms, the pyrolysis reactor **1** is placed inside the charcoal combustion external reactor **9,** thereby maximizing the thermal efficiency by receiving the maximal possible flow of heat required for pyrolysis reactions.

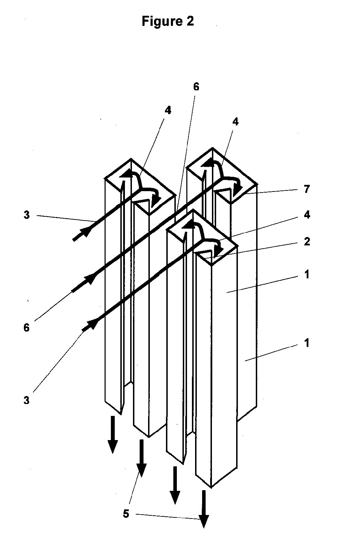

Pyrolysis vapors from the fast pyrolysis fluidized bed 2 pass into the free upper section **12,** carrying over the finer fractions of inert particulate material, as well as the major part of the fine charcoal generated in the pyrolysis reactions, which are cleaned in three consecutive steps:
1.- By a system of impact separating channels **13** placed in the upper section of the fast pyrolysis reactor (which are detailed also in Figure 2) that allow separating the major part of the inert particulate material and a minor fraction of the charcoal, which return back continually into the fluidized bed **2.**
2.- By one or more conventional cyclones **15** connected to the reactor by means of a duct **14,** wherein the remaining particulate material and the major part of the charcoal are recovered from discharge **16** from the cyclone(s).
3.- By one or more metallic or ceramic filters **19,** wherein the gas from the cyclone(s) **15** passes through the duct 17 to enter into the external chamber **18** of the filter, passes through the filter and exits without solid material **23,** to be subsequently cooled and to condense the biofuel in an external system. The filter is periodically cleaned by injection of a hot gas at high pressure (1 to 10 atmospheres) through a duct **20** placed in the upper part that is concentric with filter **19.** A fast opening valve **21** allows controlling the cleaning gas flow, which can be pyrolysis gas, nitrogen or other gas at a temperature from 300 to 900°C. The separated solid, mostly very fine charcoal, is discharged through a bottom duct **22.**

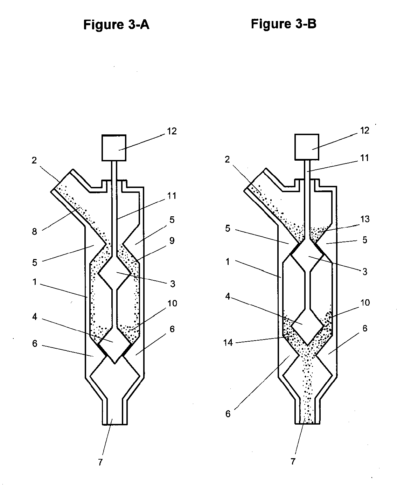

The particulate fluidized bed **2** of the fast pyrolysis reactor continually receives the preheated particulate material through a duct **33** that discharges through a solid flow control valve **62** (detailed in Figure 3), which in turn discharges into the fast pyrolysis reactor through a duct **3.** This valve prevents the hot pyrolysis vapors to pass into the top inert material preheating reactor. This valve is controlled by a conventional high-speed intermittent opening-closing system **45.** To avoid the preheated inert material that is fed into the fast pyrolysis fluidized bed **2** entering into a short circuit path, a vertical compartment or bulkhead **4** is provided in the top section of the bed.

Since the pyrolysis fluidized bed **2** operates continually, the inert particulate material and a part of the charcoal generated by pyrolysis is continually overflowing through a duct **25,** which discharges to a solid flow control valve **26** similar to the preciously described one and operated by a mechanism **27** that is also similar to the former, which in turn discharges through a duct **28** into the bottom external fluidized bed **9,** into which air is injected through the duct **57** into a plenum **61,** which distributes the air through a conventional air distributor **55.** In this reactor, the charcoal generated in the fast pyrolysis step is burned with air to generate heat at a temperature ranging from 600 to 1200°C, using an excess of air ranging from 1 to 50% for the global combustion reaction C₍ₛ₎ + O_{2(g)} = CO_{2(g)}.

The heat generated in the charcoal combustion reactor is used to preheat the carrier gas that transports the organic material to be pyrolyzed through the duct **5** and the fluidization gas for the particulate material bed of the fast pyrolysis reactor, by means of the heat exchanger **8,** placed inside the bottom external fluidized bed **9,** the top free section **29** and the top expanded section **30.** Additionally, hot gases that ascend from the zone **29** decrease their speed when entering into the expanded section **30** of the reactor, wherein the fine inert particulate material from the bed **9** that could have been carried over by the gas is returned back into the fluidized bed **9.** These hot gases ascend subsequently through the top annular section **31,** heating by forced convection the walls of the pyrolysis reactor **1** and then, in their ascending path in section **31** keep the top section of the internal pyrolysis reactor hot to avoid vapor condensation inside, to exit finally through a top duct **32,** carrying over part of the fine ashes generated by the combustion of charcoal. These gases can be conducted into an equipment, such as a conventional sleeve filter, to separate the transported ashes.

To control the temperature of the ascending gases generated in the charcoal combustion reactor, and therefore the internal temperature of the pyrolysis reactor, cold air **56** is injected at several locations in the bottom annular section **63** through a duct 57 that surrounds the pyrolysis reactor.

The inert particulate material from the bottom external fluidized bed **9** where charcoal is burned, is discharged continually through a duct **42** and a solid flow control valve **43** similar to those previously described and operated by a mechanism **44** similar to those formerly described.

In turn, the valve **43** feeds an ejector **46** driven by compressed air introduced through the duct **47** at a pressure between 1 and 20 atmospheres at room temperature, which carries over the inert particulate material through the duct **48** to a conventional cyclone **49** to separate the solid. The resulting gas is discharged into the atmosphere **64** or is conducted to an equipment, such as a conventional sleeve filter, to separate the finer ashes generated by the combustion of charcoal.

The solid separated in the cyclone **49** is discharged into a duct **51** and then into a solid flow control valve **52** similar to those previously described, which is provided with a driving mechanism **53** similar to those previously mentioned. Said valve **52** discharges the solid through a duct **54** into the fluidized bed **35,** which is fluidized with air **40** that is injected through the duct **41** and is preheated with the ascending hot gases in a conventional heat exchanger **7** located in the top expanded section **39** of the reactor. The preheated air is injected into the reactor plenum **50,** wherein it fluidizes the bed through a conventional air distributor **58.** Non-condensable pyrolysis gas or other combustible gas, or a liquid or solid fuel, is injected through a duct **36** into the fluidized bed **35,** wherein it is burned with the preheated air, thereby heating the inert particulate material of the bed to a temperature ranging from 300 to 900°C. The gases from the inert material preheating reactor finally exit through an upper duct **38.** If required, these gases can be filtered in a conventional equipment, such as a conventional sleeve filter, to separate any transported solid.

The inert particulate material preheating reactor, the charcoal combustion reactor and the upper section of the fast pyrolysis reactor and cleaning section for the pyrolysis vapors, are coated with a conventional thermal isolation **24** that keeps the desired temperature inside the reactors and minimizes heat losses into the environment.

Figure 2 shows the solid-gas separation system formed by impact channels. In this system, gases and vapors **3** from the fast pyrolysis fluidized bed impact the inner side of two or more metallic or ceramic channels **1** that are aligned in a row and separated from each other. Each channel has a squared profile or a profile with other geometry, with the edges folded toward the inside **2.** Since the suspended solids have a higher inertia than the gas and vapors that carry it, they follow an almost straight trajectory and impact the internal walls **4** of the channels, losing their kinetic energy and falling along the channels to be discharged through the lower section of the channels **5.**

Part of the solid suspended in the gases and vapors that do not impact on the first row of channels flows through the space **6** between them to encounter a second row **7** of channels in alternate position with respect to the first row, and in this way the gas losses the suspended solids by means of as many channel rows as required.

Figure 3-A shows a schematic of a solid flow control valve that is closed in the discharge step. The body **1** of the valve has a top valve seat **5** and a bottom valve seat **6,** and a central shaft **11** provided with a top cone **3** and a bottom cone **4.** The particulate solid 8 is gravitationally fed through the inlet opening **2,** which passes through the space 9 that is formed when the top cone **3** is in the upper open position, and the particulate solid accumulates in the bottom section of the valve **10** when the bottom cone **4** is in the closed position against the bottom valve seat **6.**

In the valve discharge position, as shown in Figure 3-B, the shaft **11** has its top cone **3** in the closed position against the top valve seat **5,** which allows the particulate solid that enters into the valve through the inlet **2** to accumulate on the superior cone **3** and the top valve seat **5,** while the bottom cone **4** is in the open position with respect to the bottom valve seat **6,** allowing the accumulated particulate solid **10** to discharge through the space **14** to the discharge duct **7** of the valve.

The valve opening and closing operation is carried out by means of a conventional mechanism **12,** such as a vertical action solenoid controlled by a temporizer.

### APPLICATION EXAMPLE

Radiata pine sawdust containing 11.3% of moisture content and having a size lower than 3 mm was pyrolyzed under the following conditions:

| | |
|---|---|
| Temperature : | 520°C |
| Mean reaction time of the solid : | 4 sec |
| Residence time of the vapors : | 3 sec |
| Feeding rate : | 35 kg/h |

Pyrolysis vapors were quickly condensed to produce a biofuel that represented 68.3% of the initial mass; a pyrolysis gas with 13.5% of the initial mass and fine charcoal less than 1.5 mm with 18.2% of the feed mass by weight.

## Claims

1. An equipment to produce biofuel by fast pyrolysis of organic material, wherein said equipment comprises a system of three serial fluidized bed reactors that are interconnected: a bottom combustion reactor, an intermediate fast pyrolysis reactor and a top preheating reactor; and also a pneumatic recycling system for inert particulate material.

2. An equipment to produce biofuel by fast pyrolysis of organic material according to claim 1, wherein the intermediate fast pyrolysis reactor, which uses a fluidized bed of particulate inert material, is located inside the bottom combustion reactor.

3. An equipment to produce biofuel by fast pyrolysis of organic material according to claim 1, wherein the top preheating exchanger is provided with a heat exchanger in the expanded top section thereof to preheat the combustion air.

4. An equipment to produce biofuel by fast pyrolysis of organic material according to claim 1, wherein the fast pyrolysis reactor comprises:
a. a pneumatic injection system for the feed;
b. a distributor of fluidization gas;
c. a vertical bulkhead or compartment located in the top section of the fluidized bed of the reactor;
d. inlet and outlet ducts to feed and discharge particulate material to and from the fluidized bed;
e. a heat exchanger located inside the charcoal combustion reactor;
f. a solid separation system comprising a system of impact channels; one or more serial cyclones and one or more serial submicronic filters; and a mixed gas heating system.

5. An equipment to produce biofuel by fast pyrolysis of organic material according to claim 1, wherein all the equipments and parts of the fast pyrolysis reactor, the charcoal combustion reactor and the body of the preheating reactor are thermally isolated with a conventional thermal insulator to minimize heat loss.

6. A process to produce biofuel by fast pyrolysis of organic material, wherein said process comprises the steps of:
a. pneumatically injecting organic material into the fluidized bed of the intermediate pyrolysis reactor by means of a carrier gas;
b. carrying out the fast pyrolysis of organic material in said intermediate reactor;
c. generating charcoal in the intermediate pyrolysis reactor;
d. feeding the generated charcoal through a flow control valve into a bottom reactor, blowing combustion air through a gas distributor;
e. burning the generated charcoal in the bottom reactor to preheat the fluidization gas of the pyrolysis reactor;
f. continually discharging the solid from the fluidized bed through another solid flow control valve similar to that used in "d";
g. preheating in the top reactor the inert particulate material that circulates continuously between the three reactors, collecting said material through a solid flow control valve and discharging said material through another similar valve;
h. burning in the bed of the top reactor a combustible gas, liquid or solid, using air preheated in a heat exchanger;
i. recycling the inert particulate material through a pneumatic system, operating an ejector with pressurized air and a discharge cyclone to separate the particulate solid and return it back to the top preheating reactor.

7. A process to produce biofuel by fast pyrolysis of organic material according to claim 6, wherein the particulate material used in the process is preferably, but not exclusively, quartz, quartz sand, alumina or other inert inorganic or metallic compound, with a size ranging around 0.001 - 3 mm.

8. A process to produce biofuel by fast pyrolysis of organic material according to claim 6, wherein the organic material to be pyrolyzed is preferably, but not exclusively, wood sawdust, wheat or oat straw, or any other organic material with a size lower than 10 mm and a moisture content lower than 20%, preferably with a size under 5 mm and a moisture content under 10%.

9. A process to produce biofuel by fast pyrolysis of organic material according to claim 6, wherein the carrier gas is preferably, non-condensable pyrolysis gas, nitrogen or other cold gas, previously preheated in the charcoal combustion reactor.

10. A process to produce biofuel by fast pyrolysis of organic material according to claim 6, wherein the temperature at which organic material is pyrolyzed ranges from 300 to 900°C, preferably from 400 to 600°C, with a reaction time of the organic material inside the fast pyrolysis reactor comprised between 0.05 and 30 seconds, preferably between 0.5 and 5 seconds.

11. A process to produce biofuel by fast pyrolysis of organic material according to claim 6, wherein in the fast pyrolysis reaction step, the hot vapors that do not carry solid material are externally condensed in a conventional equipment.

12. A process to produce biofuel by fast pyrolysis of organic material according to claim 6, wherein the charcoal generated in the fast pyrolysis step, mixed with the inert particulate material for fluidization that is discharged from the fast pyrolysis reactor, is burned with air in a charcoal combustion reactor at a temperature ranging from 600 to 1200°C, preferably from 750 to 950°C, using an air excess ranging from 1 to 50% of the air required to burn the charcoal, preferably from 5 to 10%.

13. A process to produce biofuel by fast pyrolysis of organic material according to claim 6, wherein the fuel used preferentially, but not exclusively, to preheat the inert particulate material in the preheating reactor is non-condensable pyrolysis gas, natural gas or other gas, liquid or solid fuel, at a temperature ranging from 500 to 900°C, preferentially from 600 to 700°C.

14. A process to produce biofuel by fast pyrolysis of organic material according to claim 6, wherein a combined heating system is used to keep the pyrolysis reactor at the desired temperature, said combined heating system comprising hot gases that circulate outside said reactor, coming from the charcoal combustion reactor; fluidization gas preheated in the bottom charcoal combustion reactor; and inert particulate material preheated in the top preheating reactor.

15. A process to produce biofuel by fast pyrolysis of organic material according to claim 6, wherein cold air is injected into the annular space comprised between the fast pyrolysis reactor and the top section of the charcoal combustion reactor, to control the temperature of gases and control the heat transferred from said gases to the walls of the fast pyrolysis reactor.
